# EUROPEAN PATENT SPECIFICATION

(11) **EP 3 186 729 B1**
(45) Date of publication and mention of the grant of the patent: **10.04.2019**
(21) Application number: 15763139.1
(22) Date of filing: 24.08.2015
(51) Int. Cl.: G06F 17/30

(54) **METHODS FOR PERSISTING DATA ON NONVOLATILE MEMORY FOR FAST UPDATES AND INSTANTANEOUS RECOVERY AND DEVICES THEREOF**
VERFAHREN ZUM PERSISTIEREN VON DATEN AUF EINEM NICHTFLÜCHTIGEN SPEICHER FÜR SCHNELLE AKTUALISIERUNGEN UND SOFORTIGE WIEDERHERSTELLUNG UND VORRICHTUNGEN DAFÜR
PROCÉDÉS DE PERSISTANCE DE DONNÉES DANS UNE MÉMOIRE NON VOLATILE POUR DES MISES À JOUR RAPIDES ET UNE RÉCUPÉRATION INSTANTANÉE ET DISPOSITIFS ASSOCIÉS

(30) Priority: 29.08.2014 US 201414472800
(43) Date of publication of application: 05.07.2017
(73) Proprietor: NetApp, Inc., Sunnyvale, CA 94089 (US)
(72) Inventor: KUMAR BK, Girish, Bangalore Karnataka 560078 (IN); JAKHAR, Vasudev, Sikar Rajasthan 332021 (IN)
(74) Representative: Savi, Massimiliano
(86) International application number: PCT/US2015/046537
(87) International publication number: WO 2016/032957

(56) References cited:
- US-A1- 2014 040 199
- Wook-Hee Kim ET AL: "Resolving Journaling of Journal Anomaly in Android I/O: Multi-Version B-tree with Lazy Split", Proceedings of the 12th USENIX Conference on File and Storage Technologies (FAST '14), 20 February 2014 (2014-02-20), XP055224389, Santa Clara, CA USA Retrieved from the Internet: URL:https://www.usenix.org/system/files/co nference/fast14/fast14-paper_kim-wook-hee. pdf [retrieved on 2015-10-29]
- John Morris: "8.3 Hash Tables", Data Structures and Algorithms, 1 January 1998 (1998-01-01), pages 1-2, XP055020458, Retrieved from the Internet: URL:http://www.cs.auckland.ac.nz/~jmor159/ PLDS210/hash_tables.html [retrieved on 2012-02-28]
- BRUNO BECKER ET AL: "An asymptotically optimal multiversion B-tree", VLDB JOURNAL, vol. 5, no. 4, 1 December 1996 (1996-12-01), pages 264-275, XP055224392, DE ISSN: 1066-8888, DOI: 10.1007/s007780050028

## Description

### FIELD

This technology generally relates to methods and devices for persistent storage and, more particularly, to methods for persisting data on nonvolatile memory for fast updates and instantaneous recovery and devices thereof.

### BACKGROUND

In the near future, nonvolatile memories (NVM), also called storage class memories (SCM) with a lower cost per gigabit (GB) than dynamic random access memory (DRAM) and with performance comparable to DRAM, will be available in a dual in-line memory module (DIMM) form factor on the memory bus next to the processor. Since the NVM's can be accessed via load and store instructions from the processor, any write to NVM via a store instruction will make the data persistent immediately after execution. As a result, data structures manipulated by the processor can be persisted in native form eliminating the need for data transformation as done in the case of disk persistency. In contrast for example, with disk persistency the data must be transformed, e.g. serialized, to disk format before issuing the write.

Persisting data structures on NVM has several advantages including providing persistency at DRAM like speed, i.e. in nanoseconds as opposed to tens of microseconds to persist data on a solid state drive (SSD) or a few milliseconds to persist data on a hard disk drive (HDD). As a result, data persistency on NVM can be achieved a hundred times faster than on a SSD and a thousand times faster than on a HDD.

Additionally, persisting data structures on NVM provides log-less durability because only one write is needed to make the data durable as opposed to two writes required in current persistency architectures, i.e. one to log the write on durable media and one to update the in-memory volatile state. As a result, persisting data structures on NVM provides a log less durable scheme with a single layer store that saves latency and space overhead.

Further, persisting data structures on NVM provides instant recovery because the data is durable immediately after a write to NVM. When a failure occurs, recovery involves reinitializing the data structures and reverting back any partial updates. Since no log replay is required when data is persisted on NVM, recovery is enabled within sub-seconds.

Accordingly, as illustrated above there are numerous advantages to persisting data structures on NVM, however doing so is not trivial and presents its own unique challenges. In particular, to persist the data structures on NVM several problems need to be solved including how to maintain application write order. Maintaining application write order on a NVM is not trivial because the processor could evict modified data in cache to NVM in an order different from an application order. As a result, while the modified data is being evicted, a system crash would leave the data on NVM in an inconsistent state potentially corrupting the data. This problem is solved by using a cache-line flush (CLFLUSH) instruction explicitly notifying the processor to evict the cache and a store fence (SFENCE) instruction to put a memory barrier before pointers to data structures in NVM are updated.

Another problem with persisting data structures on NVM is with reverting partial updates for consistency. Caches are volatile and hold the modified data before they reach NVM. When large updates need to be done in a transaction, a power failure could leave the NVM with partial updates. These partial updates need to be reverted back before any more updates are applied.

This problem is solved by knowing the history of changes so that when there is a failure the recovery involves going over the changes and reverting back the partial updates. Techniques for solving this partial update problem include logging to a durable media and then replaying based on the log when a failure occurs or using data structures that maintain a history of changes, like multi-version data structures. Using multi-version data structures has the inherent advantage of being log-less.

To maintain persistent index structures on NVM, a volatile B+Tree data storage structure can be used. Unfortunately, there are problems with this type of persistent index structures on NVM. With this type of data structure the write or insert speed was > 10 u sec for data > 64 Byte because of the ongoing sorting in the existing B+Tree data storage structure which is required. In particular, each new write or insertion creates a right shift, i.e. an insert sort, in the leaf nodes requiring execution of an additional CLFLUSH instruction to persist the right shifted data and achieve the desired durability and consistency of data structures on NVM, but this introduces undesirable latency. Additionally, with a B+Tree data storage structure when multiple updates to same key are required, the write amplification to achieve the desired durability and consistency of data structures is even more pronounced.

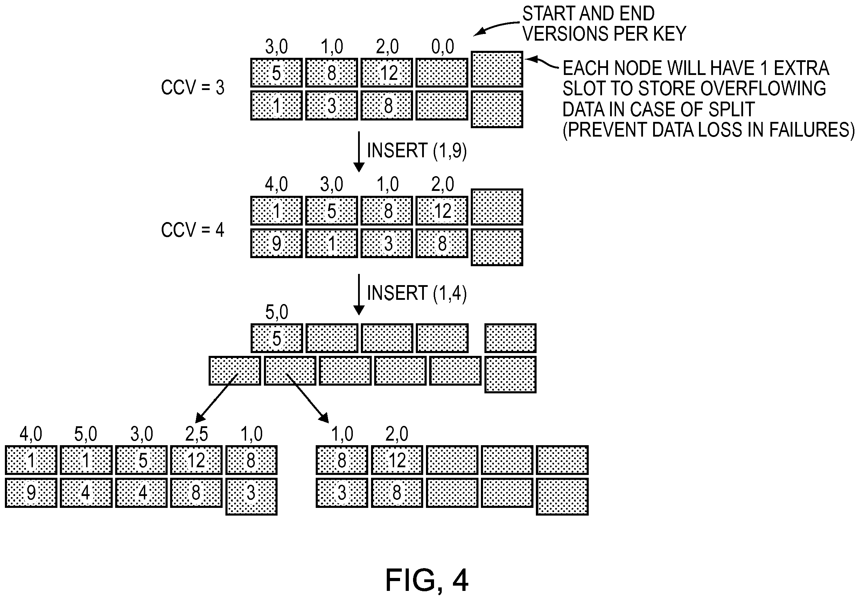

An example of this is illustrated in a prior art multi-version B+ tree data storage structure shown in FIG. 4. In this example, to insert a key/value pair of (1,9) in the last consistent version 3 (ccv = 3) of a node of the multi-version B+ tree data storage structure, the key/value pairs of (12,8), (8,3), and (5,1) are each right shifted and the key/value pair of (1,9) is inserted to eventually form the last consistent version 4 (ccv = 4) of the node.

Next, to insert a key/value pair of (1,4), the slots in the existing node are all full so two new leaf nodes must be formed. Once the two new leaf nodes formed, the key/value pairs of (12,8) and (8,3) must be right-shifted to one of the new leaf nodes and the key/value pair of (5,1) must be right shifted in the other new leaf node before the new key value pair of (1,4) can be inserted in that leaf node. Accordingly, as illustrated in this example the insertion of the key/value pair of (1,4), which has a key which matched an existing key in the key/value pair (1,9) already in the node, has a pronounced write amplification to achieve this update.

Document "Resolving Journaling of Journal Anomaly in Android I/O: Multi-Version B-tree with Lazy Split", by Wook-Hee Kim, et al, published on 2014-02-20, in Proceedings of the 12th USENIX Conference on File and Storage Technologies, discloses a multiversion B-tree which minimizes the number of "dirty" nodes which are flushed to the disk as a result of a database transaction, thus addressing a related problem but not the same as the application.

### SUMMARY

A storage management computing device including at least one memory coupled to at least one processor which is configured to execute programmed instructions comprising and stored in the at least one memory to maintain a data storage structure comprising multiple nodes on non-volatile memory in at least one storage server. A determination is made when a received key in an update matches an existing key in one of the multiple nodes in the data storage structure. When the determination indicates the match, the update is provided for insertion in a slot in a vector extending from the existing key in the one of the multiple nodes for the data storage structure which matches the received key.

A method for persisting data on non-volatile memory includes maintaining, by a storage management computing device, a data storage structure comprising multiple nodes on non-volatile memory in at least one storage server. A determination is made, by the storage management computing device, when a received key in an update matches an existing key in one of the multiple nodes in the data storage structure. When the determination indicates the match, the update is provided, by the storage management computing device, for insertion in a slot in a vector extending from the existing key in the one of the multiple nodes for the data storage structure which matches the received key.

A non-transitory computer readable medium having stored thereon instructions for persisting data in non-volatile memory comprising machine executable code which when executed by a processor, causes the processor to perform steps includes maintaining a data storage structure comprising multiple nodes on non-volatile memory in at least one storage server. A determination is made when a received key in an update matches an existing key in one of the multiple nodes in the data storage structure. When the determination indicates the match, the update is provided for insertion in a slot in a vector extending from the existing key in the one of the multiple nodes for the data storage structure which matches the received key

This technology provides a number of advantages including providing methods, non-transitory computer readable media, and devices for persisting data on nonvolatile memory for fast updates and instantaneous recovery. With this technology a leaf node is made to grow vertically for updates to the same key and to grow horizontally only for a unique key. Since the updates to the vector are done within a single insert, there are zero right shifts as compared to prior implementations which drastically reduces the write amplification. Additionally with this technology, data can be persisted in B+Tree data storage structure on NVM in native form, i.e. without any transformation using load and store memory instructions. Further, this technology optimizes the index data storage structure layout for multiple updates, e.g. ranging from one to one million updates, which improves write latency by four times and read latency by two times over prior existing systems. Even further, this technology may utilize multi-version data storage structures to take a snapshot, i.e. an application consistent view, to provide a log-less recovery mechanism with the newly added vectors.

### BRIEF DESCRIPTION OF THE DRAWINGS

FIG. 1 is a block diagram of an environment with an example of a storage management computing device that persists data on nonvolatile memory for fast updates and instantaneous recovery;
FIG. 2 is a block diagram of the example of the storage management computing device shown in FIG. 1; and
FIG. 3 is a flowchart of a method for persisting data on nonvolatile memory for fast updates and instantaneous recovery;
FIG. 4 is a diagram illustrating updates various versions in a prior art multi-version B+ tree data storage structure;
FIG. 5 is a diagram illustrating updates in a vectored multi-version B+ tree data storage structure in accordance with an example of this technology;
FIG. 6 is a graph illustrating an improvement with a vectored multi-version B+ tree data storage structure in accordance with an example of this technology in write latency by four times over prior existing systems; and
FIG. 7 is a graph illustrating an improvement with a vectored multi-version B+ tree data storage structure in accordance with an example of this technology in read latency by two times over prior existing systems.

### DETAILED DESCRIPTION

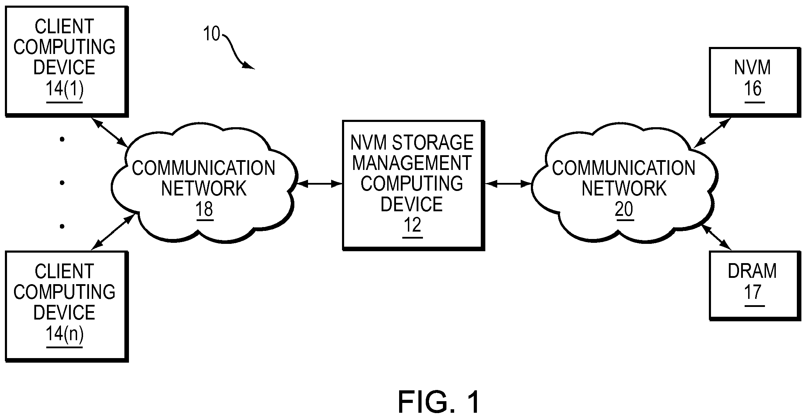

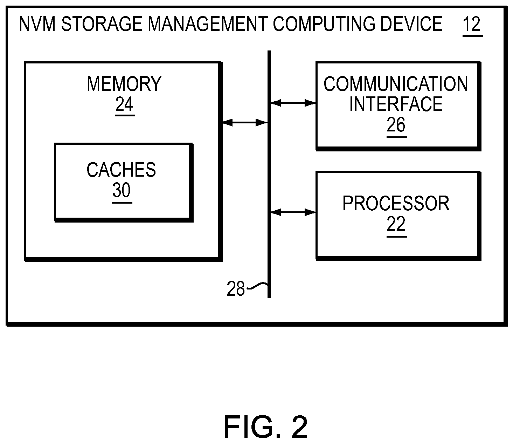

A network environment 10 with an example of nonvolatile memory (NVM) storage management computing device 12 that persists data on nonvolatile memory for fast updates and instantaneous recovery is illustrated in FIGS. 1 and 2. The exemplary environment 10 includes the NVM storage management computing device 12, client computing devices 14(1)-14(n), NVM storage device 16, and dynamic random access memory (DRAM) storage device 17, although this environment 10 can include other types and/or numbers of systems, devices, components, and/or elements in other configurations. This technology provides a number of advantages including providing methods, non-transitory computer readable media, and devices for persisting data on nonvolatile memory for fast updates and instantaneous recovery.

The client computing devices 14(1)-14(n) are in communication with the NVM storage management computing device 12 through communication network 18 and the NVM storage management computing device 12 is in communication with the NVM storage device 16, and dynamic random access memory (DRAM) storage device 17 through another communication network 20. By way of example, the communication networks 18 and 20 can be interconnects, local area networks (LANs), wide area networks (WANs), and/or combinations thereof, although other types and/or numbers of communication networks could be used.

Each of the client computing devices 14(1)-14(n) in this example can include a processor, a memory, a communication interface, an input device, and a display device, which are coupled together by a bus or other link, although each of the client computing devices 14(1)-14(n) can have other types and numbers of components. The client computing devices 14(1)-14(n) may run interface applications that provide an interface to exchange data with applications hosted by the NVM storage management computing device 12, for example. Each of the client computing devices 14(1)-14(n) may be, for example, a conventional personal computer (PC), a workstation, a smart phone, or other processing and/or computing system.

The NVM storage device 16 and DRAM storage device 17 in this example receive and respond to various read and write requests from the NVM storage management computing device 12, such as requests to write or store data as illustrated and described in the examples herein. Each of the NVM storage device 16 and the DRAM storage device 17 can include a processor, a memory, and a communication interface, which are coupled together by a bus or other link, although each of the NVM storage device 16 and the DRAM storage device 17 can have other types and numbers of components. By way of example, the NVM storage device 16 can include any type of non-volatile persistent storage and the DRAM storage device 17 can include conventional magnetic or optical disks, or suitable for storing data in a block-based architecture.

The NVM storage management computing device 12 can be utilized by the client computing devices 14(1)-14(n) to access and utilize the NVM storage device 16 and the DRAM storage device 17 to store and persist data, although other types and/or numbers of storage management computing device can be used. Referring more specifically to FIG. 2, a block diagram of the exemplary NVM storage management computing device 12 is illustrated. In this example, the NVM storage management computing device 12 includes a processor 22, a memory 24, and a communication interface 26 coupled together by a bus 28 or other link, although other numbers and types of devices can also be used.

The processor 22 in the NVM storage management computing device 12 executes a program of stored instructions one or more aspects of the present invention, as described and illustrated by way of the embodiments herein, although the processor 22 could execute other numbers and types of programmed instructions. The processor 22 in the NVM storage management computing device 12 may include one or more central processing units or general purpose processors with one or more processing cores, for example.

The memory 24 in the NVM storage management computing device 12 stores these programmed instructions for one or more aspects of the present invention, as described and illustrated herein, although some or all of the programmed instructions can be stored and/or executed elsewhere. A variety of different types of memory storage devices including random access memory (RAM), such as dynamic RAM (DRAM), or other computer readable medium which is read from and/or written to by a magnetic, optical, or other reading and/or writing system that is coupled to the processor 22 can be used. In this example, the memory 24 includes caches 30, although the memory can include other types and/or numbers of data storage, modules, and/or other programmed instructions.

The communication interface 26 in the NVM storage management computing device 12 is used to communicate between the client computing devices 14(1)-14(n) and storage server devices 16(1)-16(n), which are all coupled together via the communication networks 18 and 20, although other types and numbers of communication networks or systems with other types and numbers of connections and configurations to other devices and elements can also be used. By way of example only, one or more of the communication networks 18 and 20 can use TCP/IP over Ethernet and industry-standard protocols, including hypertext transfer protocol (HTTP), and/or secure HTTP (HTTPS), although other types and numbers of communication networks each having their own communications protocols can also be used.

Although examples of the NVM storage management computing device 12, client computing devices 14(1)-14(n), the NVM storage device 16, and the DRAM storage device 17 are described herein, the devices and/or systems of the examples described herein are for exemplary purposes, as many variations of the specific hardware and software used to implement the examples are possible, as will be appreciated by those skilled in the relevant art(s). In addition, two or more computing systems or devices can be substituted for any one of the systems in any embodiment of the examples.

The examples may also be embodied as a non-transitory computer readable medium having instructions stored thereon for one or more aspects of the present technology as described and illustrated by way of the examples herein, as described herein, which when executed by the processor 22 in the NVM storage management computing device 12, cause the processor 22 to carry out the steps necessary to implement the methods of the examples, as described and illustrated herein.

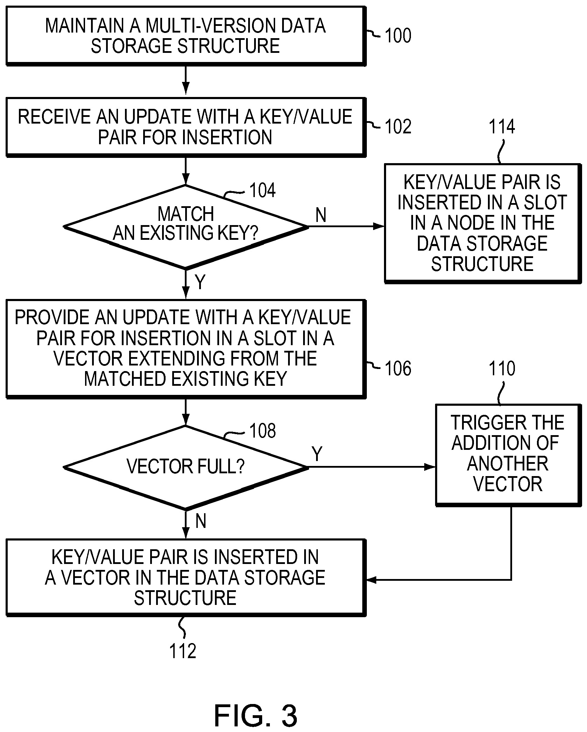

Referring to FIGS. 1-3 and 5-7, an exemplary method for persisting data on nonvolatile memory for fast updates and instantaneous recovery will now be described. Referring more specifically to FIG. 3, in step 100 the NVM storage management computing device 12 maintains a vectored, multi-version, B+tree data storage structure which supports one or more vectors, although other types and/or numbers of data storage structures which support one or more vectors could be used.

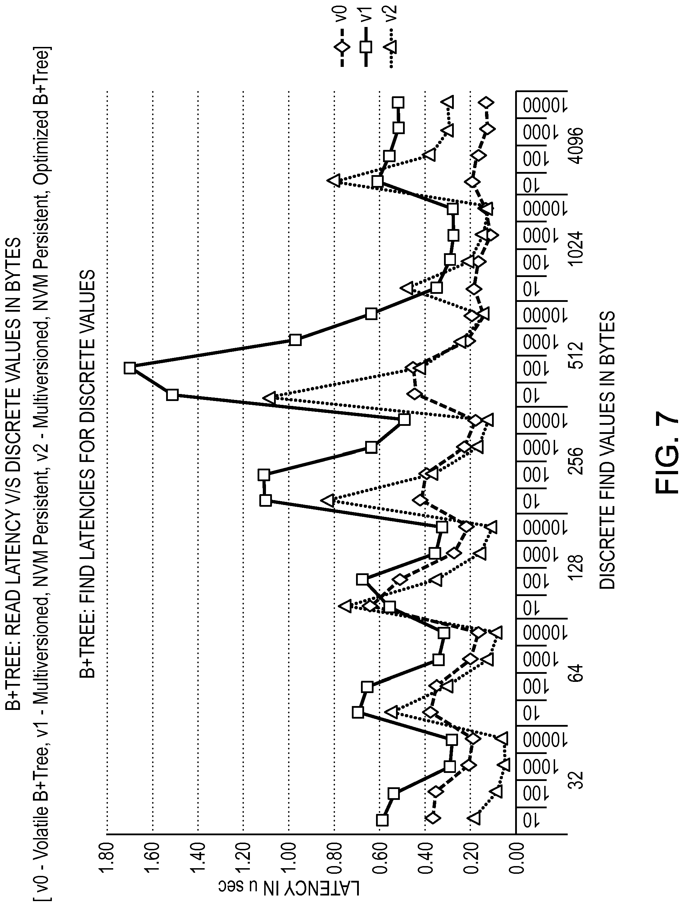

In step 102 the NVM storage management computing device 12 receives an update with a key/value pair from one of the client computing devices 14(1)-14(n) to be persisted in the NVM storage device 16, although the update can be persisted to non-volatile memory in other locations. Additionally, in this particular example, the update from one of the client computing devices 14(1)-14(n) is a write request, although the NVM storage management computing device 12 could also receive other types and/or numbers of requests from the client computing devices 14(1)-14(n), such as a read request which is also processed more effectively with this technology as illustrated in the graph in FIG. 7 discussed below.

In step 104 the NVM storage management computing device 12 determines when the received key in the key/value pair in the update from one of the client computing devices 14(1)-14(n) matches an existing key in one of the nodes in the vectored, multi-version, B+tree data storage structure. Following the example disclosed earlier in the background with reference to FIG. 4, but now with this technology with the example of the vectored, multi-version, B+tree data storage structure, when an update with a key/value pair of (1,4) is received from one of the client computing devices 14(1)-14(n), then a match to the key 1 in the key/value pair (1,9) would be found. If in step 104 the NVM storage management computing device 12 determines the received key in the key/value pair in the update from one of the client computing devices 14(1)-14(n) matches an existing key in one of the nodes in the vectored, multi-version, B+tree data storage structure, then the Yes branch is taken to step 106.

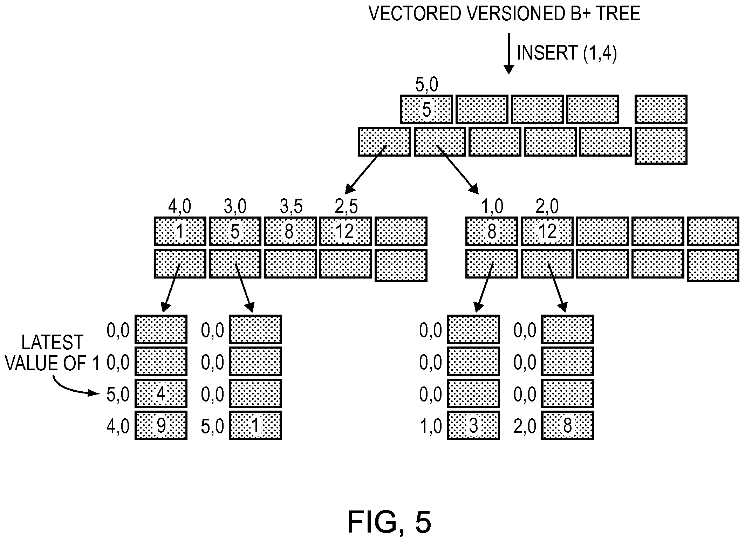

In step 106 the NVM storage management computing device 12 provides the update with the key/value pair with a received key which matches an existing key to the vectored, multi-version, B+tree data storage structure to be added into a vertical vector below the matched existing key in the node with a single operation, although other types and/or numbers of vectors or other structures in other orientations with respect to the matched existing key could be used. In this example, the update with the key/value pair with the received key is provided for addition into the vertical vector below the matched existing key in the node using a youngest first approach, i.e. the vector is reverse filled and access to youngest value is a O(1) operation, although other approaches could be used, such as an oldest first approach by way of example only. With an oldest first approach is used, the vector is filled in a forward direction and access to youngest value is an O(n) operation in this example. Accordingly, depending on which approach is utilized, e.g. youngest first or oldest first, the search time for a particular value in a vector varies. When for example a youngest first approach is used, searching for the youngest value in the vector is fastest and searching for the oldest value is the slowest. When for example an oldest first approach is used, then searching for the youngest value in the vector is slowest and searching for the oldest value is the fastest. By way of example, in FIG. 5 the key/value pair of (1,4) is provided to be added to the vertical vector below the matched existing key 1 in the node of the vectored, multi-version, B+tree data storage structure which is using the youngest first approach discussed above, although other approaches could be used, such as the oldest first approach.

In step 108 the NVM storage management computing device 12, determines if the vector below the existing key in the node of the vectored, multi-version, B+tree data storage structure on the NVM storage device 16 which matches the received key is full. If in step 108 the NVM storage management computing device 12, determines the vector below the existing key which matches the received key is full, then the Yes branch is taken to step 110.

In step 110 the NVM storage management computing device 12 triggers the addition of another vector in the node of the vectored, multi-version, B+tree data storage structure on the NVM storage device 16 when the vector extending from the existing key in the one of the multiple nodes for the data storage structure which matches the received key is full. By way of example, in FIG. 5 the first illustrated vector under the existing key 1 with the value of 9 as part of the last consistent version 4 (ccv = 4) of the node and the value of 4 as part of the last consistent version 5 (ccv = 5) of the node is not full. However, if that vector was full, another vector could be triggered for addition below the existing key 1 in the node and for purposes of illustration this additional vector is shown in FIG. 5.

If back in step 108 the NVM storage management computing device 12, determines the vector below the existing key which matches the received key is not full, then the No branch is taken to step 112. In step 112, the value in the key/value pair in the received update is added to the vector below the existing key in the node of the vectored, multi-version, B+tree data storage structure which matches the received key. Additionally, in this example the vectored, multi-version, B+tree data storage structure maintains the last current consistent version for the nodes including any values in vectors. By way of example, in FIG. 5 the value 4 of the key/value pair of (1,4) is added to the vertical vector below the matched existing key 1 in the node of the vectored, multi-version, B+tree data storage structure. Additionally, as illustrated in this example in FIG. 5 the value 4 in the vector below the existing key 1 is maintained as part of the last consistent version 5 (ccv = 5) of the node of the vectored, multi-version, B+tree data storage structure.

If back in step 104 the NVM storage management computing device 12 determines the received key in the key/value pair in the update from one of the client computing devices 14(1)-14(n) does not match an existing key in one of the nodes in the vectored, multi-version, B+tree data storage structure, i.e. is unique, then the No branch is taken to step 114. In step 114, the NVM storage management computing device 12 may provide the received key in the key/value pair for insertion in a node in the vectored, multi-version, B+tree data storage structure.

By way of example only, in FIG. 5, since the illustrated node as of the last consistent version 4 (ccv = 4) was full and now assume the received update had a key/value pair of (2,7), then there is no match between the received key and any existing key. As a result since the node is full and there are now matching keys, two leaf nodes are formed. Next, the key value pairs of (12,8) and (8,3) are right shifted to one leaf node and the key value pair (5,1) is right shifted in the other leaf node before the insert of the key value pair (2,7) between keys 1 and 5.

Accordingly, as illustrated and described with the examples herein, this technology provides methods, non-transitory computer readable media, and devices for persisting data on nonvolatile memory for fast updates and instantaneous recovery. With this technology the leaf node is made to grow vertically for updates to the same key and to grow horizontally only for a unique key. Since the updates to the vector are done within a single insert, there are zero right shifts as compared to prior implementations which drastically reduces the write amplification. Additionally, with this technology, data can be persisted in B+Tree data storage structure on NVM in native form, i.e. without any transformation, using load and store memory instructions.

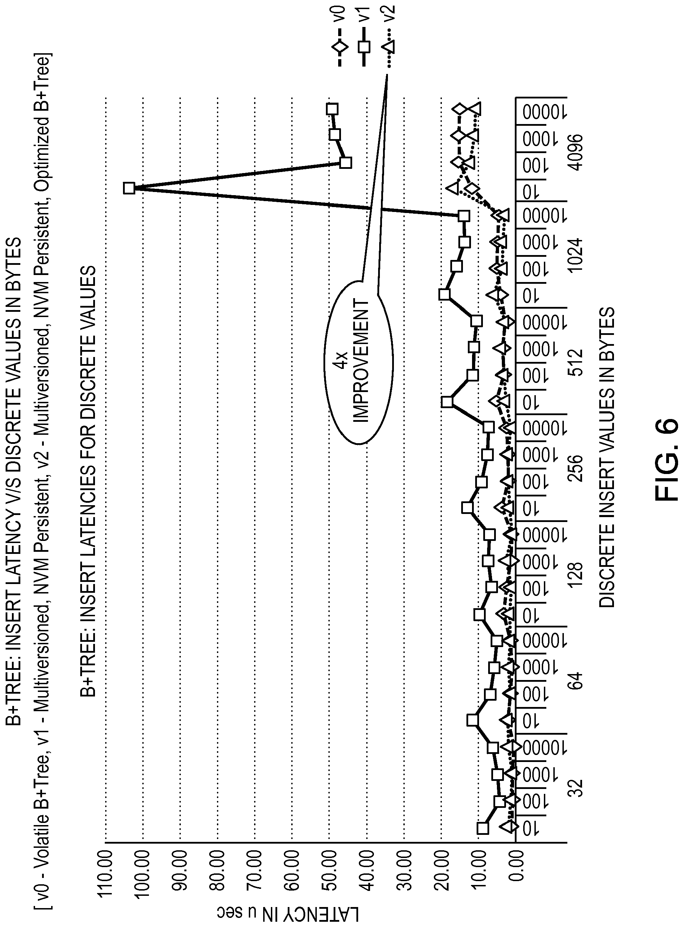

Further, this technology optimizes the index data structure layout for multiple updates, e.g. ranging from one to one million updates, so that write inserts are four times faster than base persistent MVDS and reads are two times faster than base persistent MVDS. By way of example only, a graph illustrating an improvement with a vectored multi-version B+ tree data storage structure in accordance with an example of this technology in write latency by four times over prior existing systems is illustrated in FIG. 6. Additionally, by way of example only, a graph illustrating an improvement with a vectored multi-version B+ tree data storage structure in accordance with an example of this technology in read latency by two times over prior existing systems is illustrated in FIG. 7.

Even further, this technology utilizes and extends the multi-version data structures to include vectors to provide a snapshot, i.e. an application consistent view, to provide a log-less recovery mechanism. Since no log replay is required when data is persisted on NVM in accordance with examples of this technology, recovery can be enabled within sub-seconds.

Having thus described the basic concept of the invention, it will be rather apparent to those skilled in the art that the foregoing detailed disclosure is intended to be presented by way of example only, and is not limiting. Various alterations, improvements, and modifications will occur and are intended to those skilled in the art, though not expressly stated herein. These alterations, improvements, and modifications are intended to be suggested hereby, and are within the scope of the invention. Additionally, the recited order of processing elements or sequences, or the use of numbers, letters, or other designations therefore, is not intended to limit the claimed processes to any order except as may be specified in the claims. Accordingly, the invention is limited only by the following claims.

## Claims

1. A storage management computing device, comprising:
at least one processor,
at least one memory coupled to the at least one processor which is configured to execute programmed instructions including and stored in the at least one memory to:
maintain a data storage structure including multiple nodes on non-volatile memory in at least one storage server, wherein the data storage structure comprises a multi-version B+ tree data storage structure;
determine when a received key in an update matches an existing key in one of the multiple nodes in the data storage structure; and
when the determination indicates the match, insert the update in a slot in a vector extending from the existing key in the one of the multiple nodes for the data storage structure which matches the received key.

2. The device as set forth in claim 1 wherein the processor coupled to the memory is further configured to execute one or more programmed instructions including and stored in the memory to: trigger addition of another vector when the vector extending from the existing key in the one of the multiple nodes for the data storage structure which matches the received key is full.

3. The device as set forth in claim 1 wherein the last consistent version further comprises at least the received key in the slot in the vector extending from the existing key in the one of the multiple nodes for the data storage structure.

4. The device as set forth in claim 1 wherein the processor coupled to the memory is further configured to execute one or more programmed instructions including and stored in the memory to: when the determining indicates the received key is unique from any of the existing keys, insert the update in a slot in one of the multiple nodes for the data storage structure.

5. A method for persisting data on non-volatile memory, the memory comprising:
maintaining, by a storage management computing device, a data storage structure including multiple nodes on non-volatile memory in at least one storage server, wherein the data storage structure comprises a multi-version B+ tree data storage structure;
determining, by the storage management computing device, when a received key in an update matches an existing key in one of the multiple nodes in the data storage structure; and
inserting, by the storage management computing device, when the determining indicates the match, the update in a slot in a vector extending from the existing key in the one of the multiple nodes for the data storage structure which matches the received key.

6. The method as set forth in claim 5 further comprising triggering, by the storage management computing device, addition of another vector when the vector extending from the existing key in the one of the multiple nodes for the data storage structure which matches the received key is full.

7. The method as set forth in claim 5 wherein the last consistent version further comprises at least the received key in the slot in the vector extending from the existing key in the one of the multiple nodes for the data storage structure.

8. The method as set forth in claim 5 further comprising inserting, by the storage management computing device, when the determining indicates the received key is unique from any of the existing keys, the update in a slot in one of the multiple nodes for the data storage structure.

9. A non-transitory computer readable medium having stored thereon instructions for persisting data in non-volatile memory including machine executable code which when executed by a processor, causes the processor to perform steps comprising:
maintaining a data storage structure including multiple nodes on non-volatile memory in at least one storage server, wherein the data storage structure comprises a multi-version B+ tree data storage structure;
determining when a received key in an update matches an existing key in one of the multiple nodes in the data storage structure; and
when the determining indicates the match, inserting the update in a slot in a vector extending from the existing key in the one of the multiple nodes for the data storage structure which matches the received key.

10. The medium as set forth in claim 9 further comprising triggering addition of another vector when the vector extending from the existing key in the one of the multiple nodes for the data storage structure which matches the received key is full.

11. 14. The medium as set forth in claim 9 wherein the last consistent version further comprises at least the received key in the slot in the vector extending from the existing key in the one of the multiple nodes for the data storage structure.

12. The medium as set forth in claim 9 further comprising, when the determining indicates the received key is unique from any of the existing keys, inserting the update in a slot in one of the multiple nodes for the data storage structure.

## Patentansprüche

1. Speicher-Management-Berechnungsvorrichtung, aufweisend:
zumindest einen Prozessor,
zumindest einen Speicher, der mit dem zumindest einen Prozessor verbunden ist, welcher konfiguriert ist, um programmierte Anweisungen auszuführen, die in dem zumindest einen Speicher enthalten und gespeichert sind, zum:
- Aufrechterhalten einer Datenspeicherstruktur mit mehreren Knoten auf einem nichtflüchtigem Speicher in zumindest einem Speicherserver, wobei die Datenspeicherstruktur eine Multiversions-B+- Datenspeicherbaumstruktur aufweist;
- Bestimmen, ob ein empfangener Key in einem Update mit einem bestehenden Key in einem der mehreren Knoten in der Datenspeicherstruktur übereinstimmt; und
- Einfügen des Updates in einen Slot in einem Vektor, der von dem bestehenden Key in demjenigen der mehreren Knoten für die Datenspeicherstruktur zeigt, der mit dem erhaltenen Key übereinstimmt, falls das Bestimmen eine Übereinstimmung anzeigt.

2. Vorrichtung gemäß Anspruch 1, wobei der mit dem Speicher verbundene Prozessor des Weiteren so konfiguriert ist, dass dieser eine oder mehrere Anweisungen ausführt, die in dem zumindest einen Speicher enthalten und gespeichert sind, zum:
Einleiten einer Addition eines weiteren Vektors, wenn der Vektor, der von dem bestehenden Key in demjenigen der mehreren Knoten für die Datenspeicherstruktur zeigt, der mit dem erhaltenen Key übereinstimmt, voll ist.

3. Vorrichtung gemäß Anspruch 1, wobei die letzte übereinstimmende Version des Weiteren zumindest den erhaltenen Key in dem Slot in dem Vektor aufweist, der von dem bestehenden Key in demjenigen der mehreren Knoten für die Datenspeicherstruktur zeigt.

4. Vorrichtung gemäß Anspruch 1, wobei der mit dem Speicher verbundene Prozessor des Weiteren so konfiguriert ist, dass er eine oder mehrere Anweisungen ausführt, die in dem zumindest einen Speicher enthalten und gespeichert sind, zum:
falls die Bestimmung anzeigt, dass der erhaltene Key sich von allen anderen bestehenden Keys unterscheidet, Einfügen des Updates in einen Slot in einen der mehreren Knoten für die Datenspeicherstruktur.

5. Verfahren zum Beibehalten von Daten auf einem nichtflüchtigen Speicher, wobei der Speicher aufweist:
- Aufrechterhalten einer Datenspeicherstruktur mit mehreren Knoten auf einem nichtflüchtigen Speicher in zumindest einem Speicherserver mittels einer Speicher-Management-Berechnungsvorrichtung, wobei die Datenspeicherstruktur eine Multiversions-B+- Datenspeicherbaumstruktur aufweist;
- Bestimmen mittels der Speicher-Management-Berechnungsvorrichtung, ob ein empfangener Key in einem Update mit einem bestehenden Key in einem der mehreren Knoten in der Datenspeicherstruktur übereinstimmt; und
- Einfügen mittels der Speicher-Management-Berechnungsvorrichtung des Updates in einen Slot eines Vektors, der von dem bestehenden Key zu demjenigen der mehreren Knoten für die Datenspeicherstruktur zeigt, der mit dem erhaltenen Key übereinstimmt, falls das Bestimmen eine Übereinstimmung zeigt.

6. Verfahren gemäß Anspruch 5, weiter aufweisend Einleiten mittels der Speicher-Management-Berechnungsvorrichtung einer Addition eines weiteren Vektors, wenn der Vektor, der von dem bestehenden Key zu demjenigen der mehreren Knoten für die Datenspeicherstruktur zeigt, der mit dem erhaltenen Key übereinstimmt, voll ist.

7. Verfahren gemäß Anspruch 5, wobei die letzte konsistente Version weiter zumindest den erhaltenen Key in dem Slot in dem Vektor aufweist, der von dem bestehenden Key zu demjenigen der mehreren Knoten für die Datenspeicherstruktur zeigt.

8. Verfahren gemäß Anspruch 5, weiter aufweisend Einfügen mittels der Speicher-Management-Berechnungsvorrichtung des Updates in einen Slot in einen der mehreren Knoten für die Datenspeicherstruktur, für den Fall, dass das Bestimmen zeigt, dass der erhaltene Key sich von allen anderen bestehenden Keys unterscheidet.

9. Nichtflüchtiges computerlesbares Medium mit darauf gespeicherten Anweisungen für persistente Daten auf einem nichtflüchtigen Speicher mit maschinenausführbarem Code, der bei Ausführung durch einen Prozessor den Prozessor veranlasst, Schritte auszuführen, die aufweisen:
- Aufrechterhalten einer Datenspeicherstruktur mit mehreren Knoten auf einem nichtflüchtigen Speicher in zumindest einem Speicherserver, wobei die Datenspeicherstruktur eine Multiversions-B+- Datenspeicherbaumstruktur aufweist;
- Bestimmen, ob ein empfangener Key in einem Update mit einem bestehenden Key in einem der mehreren Knoten in der Datenspeicherstruktur übereinstimmt; und
- falls das Bestimmen eine bei ermittelter Übereinstimmung zeigt, Einfügen des Updates in einen Slot in einem Vektor, der von dem bestehenden Key zu demjenigen der mehreren Knoten für die Datenspeicherstruktur zeigt, der mit dem erhaltenen Key übereinstimmt.

10. Medium gemäß Anspruch 9, weiter aufweisend: Einleiten der Addition eines weiteren Vektors, wenn der Vektor, der von dem bestehenden Key zu demjenigen der mehreren Knoten für die Datenspeicherstruktur zeigt, der mit dem erhaltenen Key übereinstimmt, voll ist.

11. Medium gemäß Anspruch 9, wobei die letzte konsistente Version weiter zumindest den erhaltenen Key in dem Slot in dem Vektor aufweist, der von dem bestehenden Key zu demjenigen der mehreren Knoten für die Datenspeicherstruktur zeigt.

12. Medium gemäß Anspruch 9, weiter aufweisen: Einfügen des Updates in einen Slot in einen der mehreren Knoten für die Datenspeicherstruktur, für den Fall, dass das Bestimmen zeigt, dass der erhaltene Key sich von allen anderen bestehenden Keys unterscheidet.

## Revendications

1. Dispositif informatique de gestion de mémoire, comprenant :
au moins un processeur,
au moins une mémoire couplée à l'au moins un processeur qui est configuré pour exécuter des instructions programmées incluant et stockées dans l'au moins une mémoire pour :
maintenir une structure de stockage de données incluant de multiples noeuds sur une mémoire non volatile dans au moins un serveur de stockage, dans lequel la structure de stockage de données comprend une structure de stockage de données d'arborescence B+ multi-version ;
déterminer quand une clé reçue dans une mise à jour correspond à une clé existante dans l'un des multiples noeuds dans la structure de stockage de données ; et
quand la détermination indique la correspondance, insérer la mise à jour dans un intervalle dans un vecteur s'étendant à partir de la clé existante dans l'un des multiples noeuds pour la structure de stockage de données qui correspond à la clé reçue.

2. Dispositif selon la revendication 1, dans lequel le processeur couplé à la mémoire est configuré en outre pour exécuter une ou plusieurs instructions programmées incluant et stockées dans la mémoire pour : déclencher une addition d'un autre vecteur quand le vecteur s'étendant à partir de la clé existante dans l'un des multiples noeuds pour la structure de stockage de données qui correspond à la clé reçue est complet.

3. Dispositif selon la revendication 1, dans lequel la dernière version cohérente comprend en outre au moins la clé reçue dans l'intervalle dans le vecteur s'étendant à partir de la clé existante dans l'un des multiples noeuds pour la structure de stockage de données.

4. Dispositif selon la revendication 1, dans lequel le processeur couplé à la mémoire est configuré en outre pour exécuter une ou plusieurs instructions programmées incluant et stockées dans la mémoire pour : quand la détermination indique que la clé reçue est unique à partir de l'une quelconque des clés existantes, insérer la mise à jour dans un intervalle dans l'un des multiples noeuds pour la structure de stockage de données.

5. Procédé de persistance de données dans une mémoire non volatile, la mémoire comprenant :
le maintien, par un dispositif informatique de gestion de mémoire, d'une structure de stockage de données incluant de multiples noeuds sur une mémoire non volatile dans au moins un serveur de stockage, dans lequel la structure de stockage de données comprend une structure de stockage de données d'arborescence B+ multi-version ;
le fait de déterminer, par le dispositif informatique de gestion de mémoire, quand une clé reçue dans une mise à jour correspond à une clé existante dans l'un des multiples noeuds dans la structure de stockage de données ; et
l'insertion, par le dispositif informatique de gestion de mémoire, quand la détermination indique la correspondance, de la mise à jour dans un intervalle dans un vecteur s'étendant à partir de la clé existante dans l'un des multiples noeuds pour la structure de stockage de données qui correspond à la clé reçue.

6. Procédé selon la revendication 5, comprenant en outre le déclenchement, par le dispositif informatique de gestion de mémoire, d'une addition d'un autre vecteur quand le vecteur s'étendant à partir de la clé existante dans l'un des multiples noeuds pour la structure de stockage de données qui correspond à la clé reçue est complet.

7. Procédé selon la revendication 5, dans lequel la dernière version cohérente comprend en outre au moins la clé reçue dans l'intervalle dans le vecteur s'étendant à partir de la clé existante dans l'un des multiples noeuds pour la structure de stockage de données.

8. Procédé selon la revendication 5, comprenant en outre l'insertion, par le dispositif informatique de gestion de mémoire, quand la détermination indique que la clé reçue est unique à partir de l'une quelconque des clés existantes, de la mise à jour dans un intervalle dans l'un des multiples noeuds pour la structure de stockage de données.

9. Support lisible par ordinateur non transitoire ayant des instructions stockées dessus pour la persistance de données dans une mémoire non volatile incluant un code exécutable par machine qui, quand il est exécuté par un processeur, amène le processeur à effectuer des étapes comprenant :
le maintien d'une structure de stockage de données incluant de multiples noeuds sur une mémoire non volatile dans au moins un serveur de stockage, dans lequel la structure de stockage de données comprend une structure de stockage de données d'arborescence B+ multi-version ;
le fait de déterminer quand une clé reçue dans une mise à jour correspond à une clé existante dans l'un des multiples noeuds dans la structure de stockage de données ; et
quand la détermination indique la correspondance, l'insertion de la mise à jour dans un intervalle dans un vecteur s'étendant à partir de la clé existante dans l'un des multiples noeuds pour la structure de stockage de données qui correspond à la clé reçue.

10. Support selon la revendication 9, comprenant en outre le déclenchement d'une addition d'un autre vecteur quand le vecteur s'étendant à partir de la clé existante dans l'un des multiples noeuds pour la structure de stockage de données qui correspond à la clé reçue est complet.

11. Support selon la revendication 9, dans lequel la dernière version cohérente comprend en outre au moins la clé reçue dans l'intervalle dans le vecteur s'étendant à partir de la clé existante dans l'un des multiples noeuds pour la structure de stockage de données.

12. Support selon la revendication 9, comprenant en outre, quand la détermination indique que la clé reçue est unique à partir de l'une quelconque des clés existantes, l'insertion de la mise à jour dans un intervalle dans l'un des multiples noeuds pour la structure de stockage de données.
